**Europäisches Patentamt**

**European Patent Office**

**Office européen des brevets**

(19)

(11) Veröffentlichungsnummer: **0 195 197**
**A2**

(12) # EUROPÄISCHE PATENTANMELDUNG

(21) Anmeldenummer: **86100986.8**

(22) Anmeldetag: **24.01.86**

(51) Int. Cl.⁴: **G 11 B 15/50**

(30) Priorität: **19.03.85 DE 3509870**

(43) Veröffentlichungstag der Anmeldung:
**24.09.86 Patentblatt 86/39**

(84) Benannte Vertragsstaaten:
**AT CH DE FR GB LI**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Schmidt, Erhard, Ing.grad.**
**Wickenstrasse 46**
**D-8510 Fürth/Bay.(DE)**

(54) **Vorrichtung zum Sperren einer elastischen Kupplung.**

(57) Es wird eine Vorrichtung zum Sperren einer elastischen Kupplung beschrieben, die ein Sperren beider Kupplungsteile ohne zusätzliche zu steuernde Verbindungselemente ermöglicht. Dies wird erfindungsgemäß dadurch erreicht, daß wenigstens eines der beiden Kupplungsteile axial verschiebbar angeordnet ist, daß beide Teile Mitnehmer aufweisen, und daß durch die Verschiebung der beiden Teile die Mitnehmer ineinandergreifen und die elastische Kupplung sperren.

EP 0 195 197 A2

- 1 -

## VORRICHTUNG ZUM SPERREN EINER ELASTISCHEN KUPPLUNG

## BESCHREIBUNG

Die Erfindung bezieht sich auf eine Vorrichtung zum Sperren einer elastischen Kupplung für den Antrieb von Wickelspulen in Magnetbandgeräten, insbesondere Videomagnetbandgeräten, gemäß dem Oberbegriff des Patentanspruchs 1.

Für den Antrieb von Wickelspulen in Magnetbandgeräten sind verschiedenartige Kupplungssysteme bekannt. Es sind auch Hysteresekupplungen für Videorecorder bekannt, bei denen die beiden Kupplungsteile durch ein von außen angeschwenktes Verbindungsglied (z. B. in Form eines Zahnrades) starr verbunden werden.

Der Erfindung liegt die Aufgabe zugrunde, eine Hysteresekupplung zu schaffen, die ein Sperren beider Kupplungsteile ohne zusätzliche zu steuernde Verbindungselemente ermöglicht.

Diese Aufgabe wird erfindungsgemäß durch die im kennzeichnenden Teil des Patentanspruchs 1 angegebenen Maßnahmen gelöst.

Vorteilhafte Weiterbildungen der erfindungsgemäßen Kupplung ergeben sich aus den Unteransprüchen 2 bis 8.

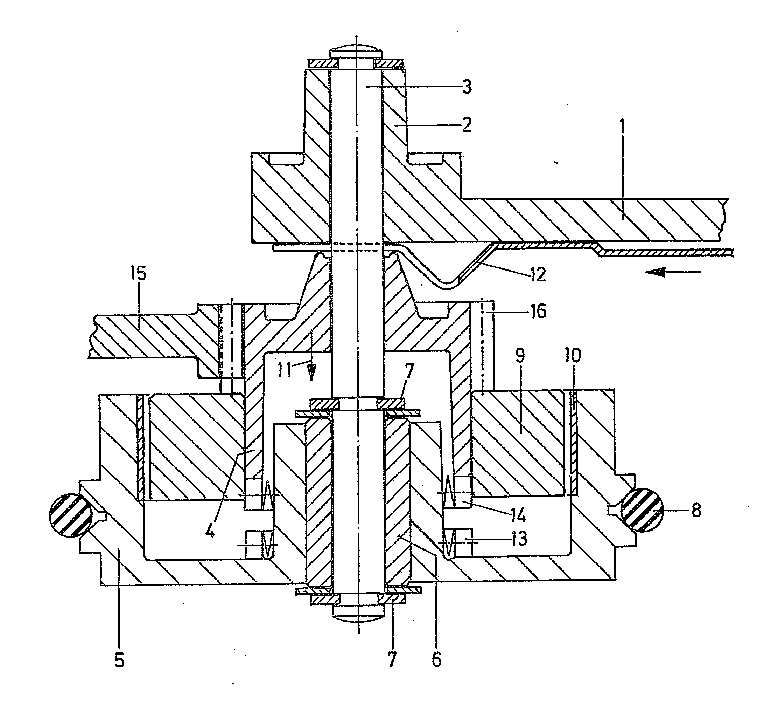

Ein Ausführungsbeispiel der Erfindung ist in der Zeichnung dargestellt und wird im folgenden näher beschrieben.

Gemäß der Zeichnungsfigur ist an einem Chassisteil 1 in einem Lagerhals 2 eine Achse 3 gelagert. Am anderen Ende der Achse 3 ist eine Kupplung angeordnet, die aus zwei ineinandergreifenden Teilen - einem inneren topfartigen Kupplungsteil 4 und einem äußeren ebenfalls topfartigen Kupplungsteil 5 - besteht. Das äußere Kupplungsteil 5 ist dabei in einem Lager 6 gelagert, und mit Sicherungsscheiben 7 gesichert. Am Umfang des äußeren Kupplungsteils 5 liegt ein Treibriemen 8 an, der zu einem (nicht dargestellten) Antriebsmotor führt. Am äußeren Umfang des inneren Kupplungsteils 4 ist ein Polmagnet 9 angeordnet, dem ein Hystereseblech 10 am inneren Umfang des äußeren Kupplungsteils 5 gegenüberliegt.

Eines der beiden Kupplungsteile - in der Zeichnung das innere Kupplungsteil 4 - ist erfindungsgemäß axial verschiebbar angeordnet, was der Pfeil 11 kennzeichnet. Zur axialen Verschiebung des einen Kupplungsteils ist ein steuerbarer Schieber oder Hebel 12 vorgesehen, der, vom Betriebsartenschalter betätigt, in das zu verschiebende Kupplungsteil eingreift. Durch die axiale Verschiebung wird eine form- und/oder kraftschlüssige Verbindung der beiden Kupplungsteile von ineinander greifenden Mitnehmern 13, 14 hergestellt. Der Kraftschluß kann dabei durch Ausbilden der Mitnehmer 13, 14 als stirnseitige Verzahnung an beiden ineinander verschiebbaren Kupplungsteilen erfolgen. Der Kraftschluß kann aber auch durch eine innere und/oder äußere Radialverzahnung erfolgen.

Gemäß einer Weiterbildung des Erfindungsgegenstandes sind Polmagnet 9 und Hystereseblech 10 derart versetzt angeordnet, daß die Kraftwirkung des Polmagneten 9 das verschiebbare innere Kupplungsteil 4 entgegen der Richtung zur kraftschlüssigen Verbindung bewegt.

Ein Abtrieb 15 ist gemäß der Zeichnungsfigur über einen Zahnkranz 16 mit dem inneren Kupplungsteil 4 verbunden. Der Abtrieb 15 kann dabei bedarfsweise zugleich mit dem Verschiebungsvorgang ein- und auskuppelbar sein.

Chassis 1, Abtrieb 15 sowie der Antriebsmotor sind der Übersichtlichkeit wegen in der Zeichnung nicht näher dargestellt, da sie für das Verständnis der Erfindung nicht notwendig sind und diese Teile der Fachmann für den jeweiligen Anwendungsfall entsprechend auszugestalten und vorzusehen vermag.

Um ein weitestgehend kraftfreies Entkuppeln zu ermöglichen, ist eine Stirnverzahnung vorteilhaft, in der die Flankenabschrägung in ein bestimmtes Verhältnis zur Größe des Reibwinkels gesetzt ist. Die versetzte Anordnung der Bauteile Polmagnet 9 und Hystereseblech 10 wird ausgenützt, um die Kupplung nach Aufheben der Sperrung durch Entfernen des Schiebers 12 aus der Sperrfunktion axial in die Stellung der Betriebsfunktion zu bringen.

Wie bereits dargelegt wurde, bringt das axiale Verschieben eines der beiden Kupplungsteile die jeweils zugeordneten Mitnehmer zum Eingriff, wodurch im vorliegenden Anwendungsfall für Videomagnetbandgeräte

beispielsweise für den Umspulvorgang das nötige
Antriebsmoment erzielt wird.

Eine weitere Ausgestaltungform der erfindungsgemäßen
Hysteresekupplung mit Sperreinrichtung kann darin
bestehen, daß auf der inneren Grundfläche des äußeren Kupplungsteils ein Hystereseblech angeordnet
ist, während das axial verschiebbare innere Kupplungsteil im wesentlichen scheibenförmig ausgebildet ist
und die dem Hystereseblech zugewandte Außenfläche der
Scheibe dem Hystereseblech gegenüberliegende Polmagnete aufweist. Die erforderliche Verzahnung für
die Sperreinrichtung wird hierbei als Zahnkranz am
äußeren Umfang des inneren Kupplungsteils und durch
einen gegenüberliegenden inneren Zahnkranz am äußeren
Kupplungsteil vorgesehen.

VORRICHTUNG ZUM SPERREN EINER
ELASTISCHEN KUPPLUNG


PATENTANSPRÜCHE


1. Vorrichtung zum Sperren einer elastischen
Kupplung für den Antrieb von Wickelspulen in Magnetbandgeräten, insbesondere Videomagnetbandgeräten,
bei denen die Wickelspulen wahlweise mit unterschiedlichen Wickelgeschwindigkeiten antreibbar sind
und die elastische Kupplung vorzugsweise als Hysteresekupplung ausgebildet ist, die aus zwei axial
zugeordneten Teilen (4, 5) besteht,
d a d u r c h   g e k e n n z e i c h n e t ,   daß
wenigstens eines der beiden Kupplungsteile (4) axial
verschiebbar angeordnet ist, daß beide Teile (4, 5)
Mitnehmer (13, 14) aufweisen, und daß durch die Verschiebung der beiden Teile (4, 5) die Mitnehmer (13,
14) ineinandergreifen und die elastische Kupplung
sperren.

2. Vorrichtung nach Anspruch 1, d a d u r c h g e k e n n z e i c h n e t , daß die beiden Kupplungsteile (4, 5) aus einem inneren (4) und einem äußeren Kupplungsteil (5) bestehen, wobei das innere Kupplungsteil (4) topfförmig ausgebildet ist und mit einem am äußeren Umfang angeordneten ringförmigen Polmagneten (9) in das gegenüberstehende ebenfalls topfförmige, und ein Hystereseblech (10) am inneren Umfang tragende äußere Kupplungsteil (5) eintaucht.

3. Vorrichtung nach Anspruch 2, d a d u r c h g e k e n n z e i c h n e t , daß der Polmagnet (9) und das Hystereseblech (10) derart versetzt angeordnet sind, daß die Kraftwirkung des Magneten das verschiebbare Teil entgegen der Richtung zur kraftschlüssigen Verbindung bewegt.

4. Vorrichtung nach Anspruch 1, 2 oder 3, d a d u r c h g e k e n n z e i c h n e t , daß die Mitnehmer (13, 14) in Form einer gegenüberstehenden stirnseitigen Verzahnung ausgebildet sind.

5. Vorrichtung nach Anspruch 1, 2 oder 3, d a d u r c h g e k e n n z e i c h n e t , daß die Mitnehmer (13, 14) in Form einer inneren und/oder äußeren Radialverzahnung ausgebildet sind.

6. Vorrichtung nach einem der Ansprüche 1 bis 5, d a d u r c h   g e k e n n z e i c h n e t ,   daß zur Verschiebung eines der beiden Kupplungsteile (4, 5) ein vom Betriebsartenschalter steuerbarer Schieber oder Hebel (12) in das zu verschiebende Teil (4) eingreift.

7. Vorrichtung nach einem der Ansprüche 1 bis 6, d a d u r c h   g e k e n n z e i c h n e t ,   daß bedarfsweise der Abtrieb (15) mit dem Verschiebungsvorgang ein- und auskuppelbar ist.

8. Vorrichtung nach einem der Ansprüche 1 bis 7, d a d u r c h   g e k e n n z e i c h n e t ,   daß der Antrieb der elastischen Kupplung vorzugsweise über das äußere Kupplungsteil (5) mittels eines Treibriemens (8) und der Abtrieb (15) über das innere Kupplungsteil (4) mittels eines Zahnkranzes (16) erfolgt.